# EUROPEAN PATENT APPLICATION

(11) **EP 1 227 680 A1**
(43) Date of publication of application: **31.07.2002**
(21) Application number: 00966517.5
(22) Date of filing: 16.10.2000
(51) Int. Cl.: H04N 7/08, H04N 5/445, G06F 17/30

(54) **TELEVISION BROADCASTING METHOD, TELEVISION BROADCASTING APPARATUS, RECEIVER, AND MEDIUM**

(30) Priority: 18.10.1999 JP 29523399
(71) Applicant: Dentsu Inc., Chuo-ku, Tokyo 104-8426 (JP)
(72) Inventor: AKIYAMA, Ryuhei, Chuo-ku, Tokyo 104-8426 (JP); MAEDA, Hiroki, Chuo-ku, Tokyo 104-8426 (JP)
(74) Representative: Hitching, Peter Matthew
(86) International application number: JP0007171
(87) International publication number: WO0130075

(57) **Abstract**

The present invention provides a function of easily selecting a desire-to-watch program by a simple operation. A plurality of maps 7 of different ranges of a resident area of a viewer are previously transmitted and accumulated in a memory built in a TV receiver. The maps are categorized for walking, a bicycle and a car on the basis of a location of a house of the viewer, and the maps suited to respective applications can be seen by selecting icons 8 (71) displayed on a screen . Further, it is possible to display, on the map, positions of department stores, supermarkets, restaurants and amusement parks and, in addition, information of inserts, menu information of the restaurants, and event information of the amusement parks by selecting the icons 8 (75). Moreover, information on a traffic congestion, natural disasters and others can be displayed on the map and properly rewritten. Viewers can easily obtain these pieces of information by operating a remote controller.

## Description

### Technical Field

The present invention relates generally to a television broadcasting method in accumulated broadcasts using digital waves that utilizes an ISDB system, and more particularly to a television broadcasting method by which a storage means of a receiving device for receiving TV broadcasts is stored with various categories of general living information edited based on a living zone of a viewer together with map information, and the viewer can extract and utilize them according to the necessity.

Herein, the general living information is weather information, season information event information incident information, traffic information, public information, advertisement information (e.g., shop information) according to a local area where the viewer resides.

### Background Arts

There has hitherto been proposed what utilizes a receiving device for ISDB (Integrated Service Digital Broadcasting) so that area signal information can be semi-automatically obtained from broadcast signals (Japanese Patent Application Laying-Open Publication No.9-55673). What is proposed therein is that information (area-by-area information) peculiar to the area is transmitted in addition to the broadcast signals, the area-by-area information is searched for by GPS (Global Positioning System) on the basis of an area code after receiving the information, and the information (a weather chart, a map, a commercial etc) peculiar to that local area by displaying the area-by-area information (paragraphs 0001, 0024 in the Publication described above).

Further, Japanese Patent Application Laying-Open Publication Nos. 9-214908 and 10-28243 disclose such a point that a selected item of information is extracted from within the transmitted information and then stored with respect to the same technology.

Moreover, what utilizes an address and a telephone number in order to extract a specified item of area information from within TV signals transmitted, is disclosed (Japanese Patent Application Laying-Open Publication No.10-164527).

Further, there is an invention of an advertisement information registering method of displaying a map on the basis of map information previously stored, and specifying a position of an advertisement object on the map (Patent No.2756483).

In the midst of examining the ISDB system, there has been proposed such a point that the storage means of the receiving device is stored with the area-by-area information as disclosed in the prior arts given above and the viewer extracts the information as the viewer intends, however, a more sophisticated using mode was not proposed.

According to the prior arts described above, though it was described that the area-by-area information is hierarchized (paragraph 0039 in Japanese Patent Application Laying-Open Publication No.9-55673), nothing specific about obtaining elaborate display (services) is disclosed. A scheme of providing easy-to-utilize accumulated broadcasts and easy-to-obtain information to the viewers, needs some contrivance.

### Disclosure of Invention

Accordingly, the present invention, which was devised to overcome the above problems, aims at setting a selected item of information more available to a viewer and facilitating the use of the area-by-area information selected from within the broadcast signals.

To obviate the problems given above, a television broadcasting method as claimed in claim 1 according to the present invention includes a step of storing a storage means (3) of a receiving device (2) with a program selected from within broadcast signals, and general living information consisting of plural items of information on a local area base together with an area map (7) ; and a step of displaying on a screen an arbitrary item of information selected from within the general living information together with the map (7).

The above television broadcasts are digital broadcasts from local areas or from nationwide broadcasting stations, and the storage means (3) such as a hard disk etc provided within the TV receiving device is stored with contents of the broadcast selected, e.g., news, weather forecast, traffic information and others. The contents of the broadcast to be recorded are not limited to the examples given above but may be other programs. The information such as the traffic information, the advertisement information etc which are more available to the viewers, is broadcast in a way that displays necessary items on the map information separately stored.

In the television broadcasting method as claimed in claim 2 according to the present invention, the general living information is one of weather information, season information, event information, incident information, traffic information public information and shop information on the local area base.

The season information represents, for example, blooming information of cherry blossoms, information on migratory birds, snowfall information and others in the local areas, and these pieces of information are displayed on the screen. The event information indicates, e.g., festivals in the local areas, events of self-governing bodies and so on. The incident information represents information on, e.g., fires, flood damages etc in the local areas. The traffic information indicates traffic congestion information etc of the roads in the local areas. The public information represents indicates road constructions, cleanings, garbage collections, tax payments and so on in the local areas. The shop information is, for instance, advertisement information, and indicates information on opening of the shop and bargain sales and others.

In the television broadcasting method claimed in claim 3 according to the present invention, the information displayed on the screen is a map (7), an advertisement (9), a present time (6), and a recorded/selected program.

In the television broadcasting method claimed in claim 4 according to the present invention, a content of the recorded/selected program or the general living information is hierarchized. With the content hierarchized, the viewer can be informed of more detailed content of the program and can select and utilize various categories of area-by-area information as the viewer intends according to the necessity.

Further, a television broadcasting method of broadcasting to a television receiving device (2) having a storage device (3, 203, 205), includes a step of generating distribution information by synthesizing positional information for specifying a point with general living information (120, 121, 122) on this point, and a step of distributing the distribution information together with a predetermined piece of control information (DII) , wherein the general living information (120, 121, 122) is accumulated in the television receiver (2).

Preferably, this television broadcasting method further include a step of incorporating category information for categorizing the general living information into the distribution information.

Preferably, the general living information (120, 121, 122) may be any one of weather information, season information, event information, incident information, traffic information public information and advertising information on the local area base or a combination thereof.

Preferably, the general living information (120, 121, 122) may contain information for specifying a time related to the general living information concerned, and displaying the information concerned may be controlled based on calendar information (214) or time information (213) within the television receiver (2).

Further, according to the present invention, a television broadcasting device for broadcasting to a television receiving device (2) having a storage device, includes an information processing unit (92) for generating distribution information by synthesizing positional information for specifying a point with general living information (120, 121, 122) on this point, and a transmission unit (97) for distributing the distribution information together with a predetermined piece of control information (DII) , wherein the general living information (120, 121, 122) is accumulated in the television receiver (2).

Preferably, the distribution information may contain category information for categorizing the general living information.

Moreover, according to the present invention, a television receiver (2) to or into which a display unit (211) is connected or incorporated, includes a map information recording unit (8, 203, 205) for retaining map information, a receiving unit (204) for receiving general living information containing positional information for specifying a point, a living information recording unit (83, 203, 205) for recording the general living information received, and a control unit (86, 202, 207) for controlling displaying on the display unit, wherein the control unit (86, 202, 207) synthesizes the general living information (120, 121, 122) with map information (7) in accordance with the positional information and displays the synthesized information on the display unit (211).

Preferably, this television receiver (2) further include an operation unit (4) for detecting an operation of a viewer, wherein the distribution information contains category information for categorizing the general living information (120, 121, 122), the living information recording unit (83, 203, 205) records the general living information (120, 121, 122)in a way that relates the general living information to predetermined category items (105) on the basis of the category information, and the display unit (211) displays the map information (7) and one or more category items(105) and displays, when any one of the category items (105) is operated through the operation unit, a symbol of the general living information (120, 121, 122) related to this operated category item (105)at a concerned point on the map.

Preferably, when the operation unit (4) detects a predetermined operation during the display of the symbol, the display unit (211) may display pieces of link information to the general living information (120, 121, 122) and may display, when the operation unit (4) detects an operation upon any one piece of link information, details of the general living information (120, 121, 122).

Preferably, the general living information (120, 121, 122) may contain information for specifying a time related to the general living information concerned, the control unit may refer to calendar information (214) or time information (213), and the control unit (86, 202, 207) may control displaying the general living information on the basis of the calendar information (214) or the time information (213) . Herein, the control of displaying implies, e.g., restricting a display time, changing a display mode depending on the display time, and changing a content to be displayed depending on the display time.

Preferably, the control unit may execute filtering of the received general living information (120, 121, 122) on the basis of the positional information.

According to the present invention, there is provided a readable-by-computer recording medium recorded with a program for providing the functions described above.

The present invention deals with the broadcasting programs accumulated in a hard disk memory built in a digital television, and the information thereof is automatically rewritten several times a day by utilizing the data broadcast. The broadcasting programs can be watched for 20 hours a day throughout the year. According to the broadcasting programs, the individual viewers are informed of information on the vicinities of resident areas of the viewers, for instance, time changes such as morning, noon and night, weathers, seasons etc, festivals in local areas, a variety of events such as events of self-governing bodies, incident information such as fires, water damages etc, traffic information such as traffic congestion etc, public information like road constructions, cleanings, garbage collections, tax payments etc, shop information such as opening of new shops, bargain sales, fairs and so on while scrolling the map in ranges of 2 km, 5 km and 10 km in all directions as the necessity may arise.

Herein, the data broadcast is a broadcasting system for transmitting various categories of data such as software of personal computers and game machines, electronic newspaper and so on via satellite lines, and is capable of transmitting the data having a large capacity at a high speed.

According to the present invention, the content of the accumulated broadcast program is automatically rewritten several times a day and can be watched for 24 hours a day throughout the year, and hence the viewer can utilize the latest information at all times. The information about the vicinities of the resident areas of the viewers , e.g., the time changes, the variety of events, the incident information, the traffic information, the public information and the shop information (the advertisement information), can be separately used corresponding to purposes . The map display range can be selected depending on the usage from the ranges of, e.g., 2 km, 5 km and 10 km around, and besides the individual viewers can be informed of it in a way that scrolls the map.

The viewer is able to, if making use of revenues from the advertisements of enterprises and shops that are displayed on the maps, use the system of the present invention free of charge or at a lower cost. This system is capable of offering lower costs for printing and delivering to advertisers than inserts and advertisements on telephone directories. Further, the advertisement range can be set more elaborately than the TV commercials provided so far, and sales promotions on an area-by-area basis and changes in the contents of the advertisements can be facilitated.

### Brief Description of the Drawings

FIG. 1 is a schematic diagram showing how a necessary program selected from within broadcast signals received is stored in a storage means;
FIG. 2 is a diagram illustrating a menu screen displayed by an operation on a remote controller;
FIG. 3 is a diagram showing the menu screen shown in FIG. 2, which is displayed when clicking news;
FIG. 4 is a diagram showing the menu screen shown in FIG. 2, which is displayed when clicking weather forecast;
FIG. 5 is a diagram showing the menu screen shown in FIG. 2, which is displayed when clicking mail;
FIG. 6 is a diagram showing the menu screen shown in FIG. 2, which is displayed when clicking showroom;
FIG. 7 is a diagram illustrating a map in the vicinity of a resident area of a viewer;
FIG. 8 is a block diagram showing the present invention;
FIG. 9 is a diagram showing an initial screen of a life map in a second embodiment of the present invention;
FIG. 10 is a diagram showing a screen indicating a procedure of limiting information by an icon bar 105;
FIG. 11 is a diagram showing a screen transition of a general map-based advertisement;
FIG. 12 is a diagram showing a procedure of configuring a screen on which an area map 7 is synthesized with icons;
FIG. 13 is a diagram showing a hardware architecture of a broadcasting system in this embodiment;
FIG. 14 is a diagram showing a structure of data that are broadcast by the broadcasting system;
FIG. 15 is a diagram showing a hardware architecture of a receiving device 2 in the second embodiment;
FIG. 16 is a diagram showing a structure of a content edited by a content server 91 shown in FIG. 13;
FIG. 17 is a diagram showing a structure of a category tree for categorizing contents;
FIG. 18 is a diagram showing a structure of an event list;
FIG. 19 is a flowchart showing a content receiving process;
FIG. 20 is a flowchart showing details of a saving process shown in FIG. 19;
FIG. 21 is a flowchart showing a map-based advertisement display process;
FIG. 22 is a flowchart showing details of an initial screen display process in FIG. 21;
FIG. 23 is a flowchart showing details of the map-based advertisement display process with an icon bar in FIG. 21; and
FIG. 24 is a flowchart showing a general map-based advertisement display process in FIG. 21.

### Best Mode for Carrying out the Invention

Preferred embodiments of the present invention will hereinafter be described with reference to the drawings.

### «First Embodiment»

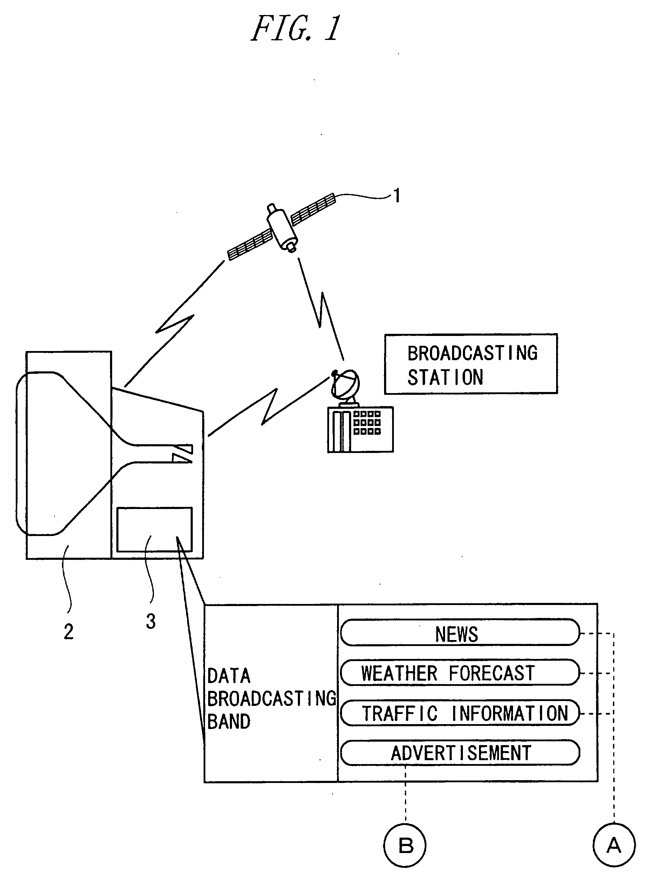

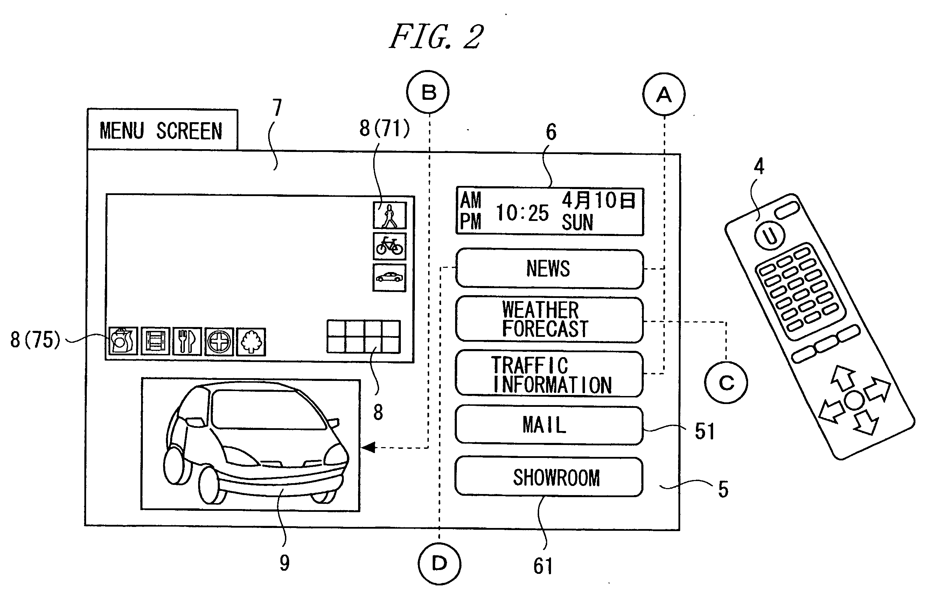

A first embodiment of the present invention will hereinafter be explained in conjunction with the drawings in FIGS. 1 through 8. FIG. 1 is a schematic view showing how broadcasting signals according to the present invention are received, and a necessary program within the broadcasting signals is stored in a storage means of a receiving device. A viewer, when utilizing a system of the present invention, inputs information (e.g., a post code) of the resident district to a television through a remote controller. The receiving device 2 receives the broadcasting radio waves from broadcasting stations (local broadcasting stations, broadcasting stations in nationwide networks) via a broadcasting satellite 1. The receiving device 2 selects, for instance, new, weather forecasts, traffic information and advertisements among them by use of technologies disclosed in, e.g., Japanese Patent Application Laying-Open Publication No.9-214875, Japanese Patent Application Laying-Open Publication No.10-28243 and Japanese Patent Application Laying-Open Publication No.10-164527. The receiving device 2 stores the selected program in the storage means such as a hard disk 3 etc in the receiving device. Further, the receiving device 2 has the remote controller 4 (FIG. 2) by which a cursor on the screen can be clicked.

The receiving device 2 is provided with a circuit for displaying the selected/recorded program together with other items of information on the screen. As shown in FIG. 2, the viewer operates the remote controller 4, thereby displaying a menu screen. The menu screen is configured by a program guide display 5 for, programs of records of e.g., news, weather forecasts, traffic information etc, mails, showrooms and other, a present time 6, an area maps displayed together with icons 8, and an advertisement screen 9. Each item of information is attached with tags and can be pulled out by clicking the icon.

The area map 7 is a map covering a viewer's resident area 50 Km or 100 Km around. These maps are accumulated in the storage means 3. The viewer selects what is drawn to a scale desired by the viewer from among plural types of maps accumulated through a program built in the storage means 3. Further, the viewer is able to scroll the map displayed on the screen in the up and down directions and in the right and left directions.

The hole content displayed on the screen described above or the whole system of the present invention will hereinafter be called a "life map".

Next, the way by which the viewer obtains necessary items of information from the life map on the menu screen, will be explained.

The viewer receives a distribution (or purchases) the resident area map by inputting a home address (post code) to the TV receiving device or sending the home address to a customer center, and stores the map in the storage means of the receiving device 2. Then, the viewer performs digital coding of a telephone number and an ID number of the TV receiving device on the map, whereby the necessary items of information are automatically selectively received.

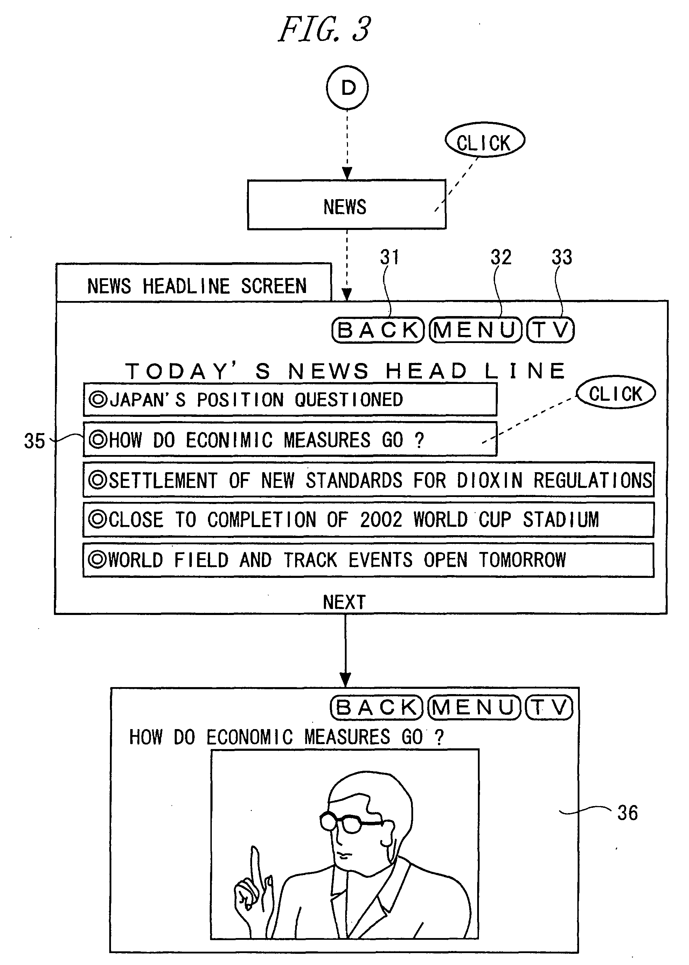

The viewer at first selects the life map by using the remote controller 4, displays the menu screen, moves the cursor (unillustrated) onto, e.g., the selected/recorded news in the program guide display 5, and clicks it. Then, a head line of the recorded news program is displayed on the screen (FIG. 3). Further, the viewer moves the cursor onto what is desired among them, and clicks, for instance "How do economic measures go?" 35, thereby displaying a news content 36 thereof on the screen. There is provided, though not shown, a function of hierarchizing and sorting the news program into, e.g., current event news, sports news and entertainment news.

Further, when the viewer moves the cursor onto an icon 31 (labeled as "BACK") and clicks it on the screen showing the news headline, a previous screen, if any, exists before the headline, the display is scrolledback to this screen. Moreover, when the viewer similarly clicks an icon 32 (labeled as "MENU") , the display is scrolled back to the menu screen. Further, when the viewer clicks an icon 33 (labeled as "TV") , the display is scrolled back to a TV screen of the channel selected at that time.

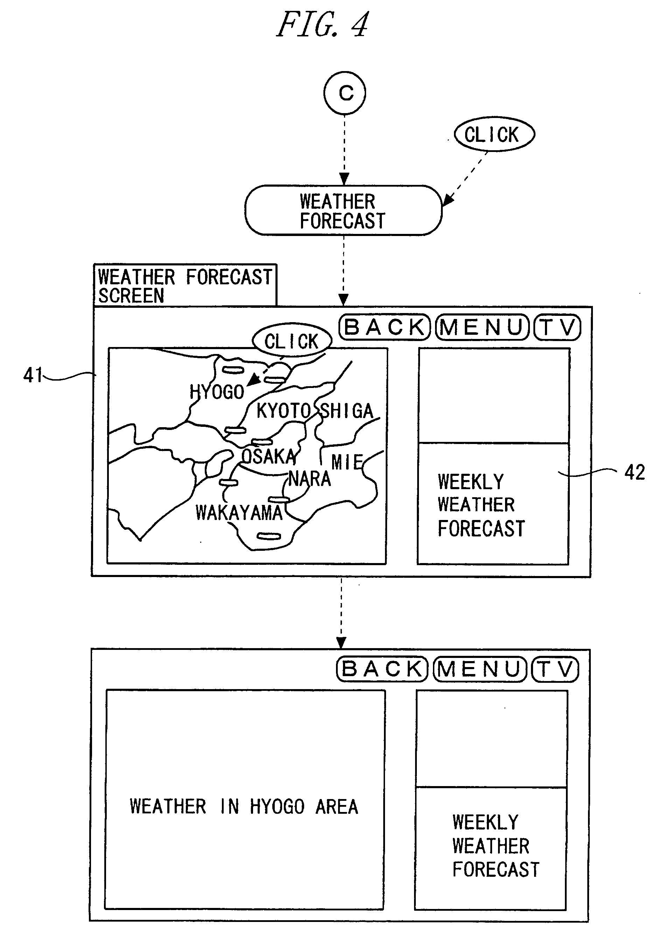

FIG. 4 shows a display screen in the case of selecting the weather forecasts from the program guide display 5 on the menu screen. When the viewer clicks the weather forecasts, there are displayed a screen 41 showing an area (, e.g., Kansai area) map and weather marks of respective prefectures, and weekly weather forecasts 42 of the respective prefectures.

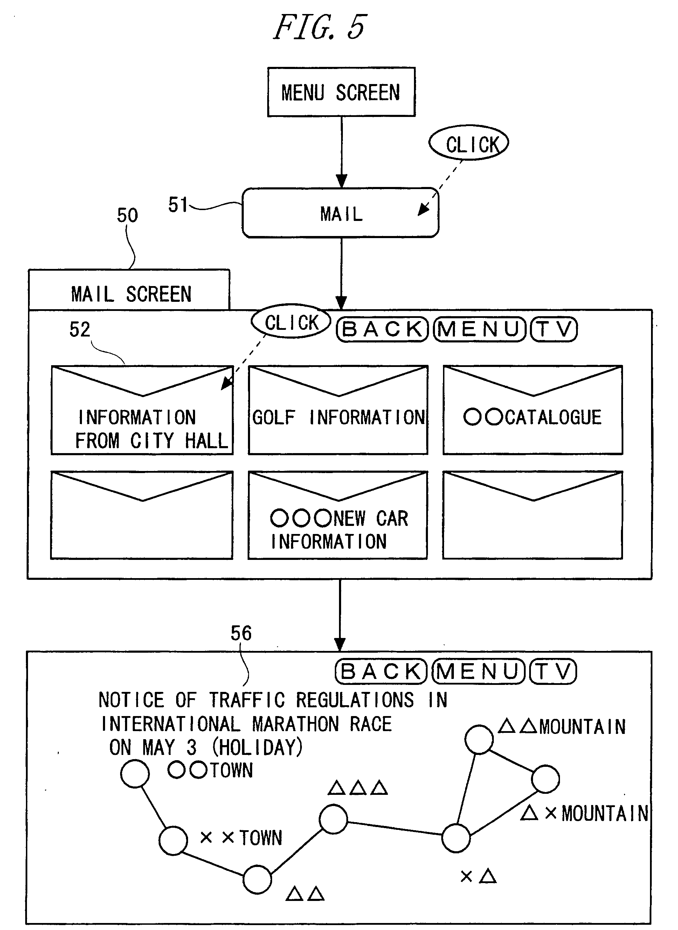

FIG. 5 shows a display screen when the viewer clicks a mail 51 in the program guide display 5. In this case, various categories of information (public information, advertisement information etc) are displayed on the mail screen 50. When the viewer clicks, for example, "Information from the City Hall" 52, a next screen 56 displays a screen of road regulations related to en event of the International Marathon Race. On a further next screen (unillustrated), the on-the-spot screen of the marathon race is displayed in such a way that the display content is hierarchized so as to get more and more detailed.

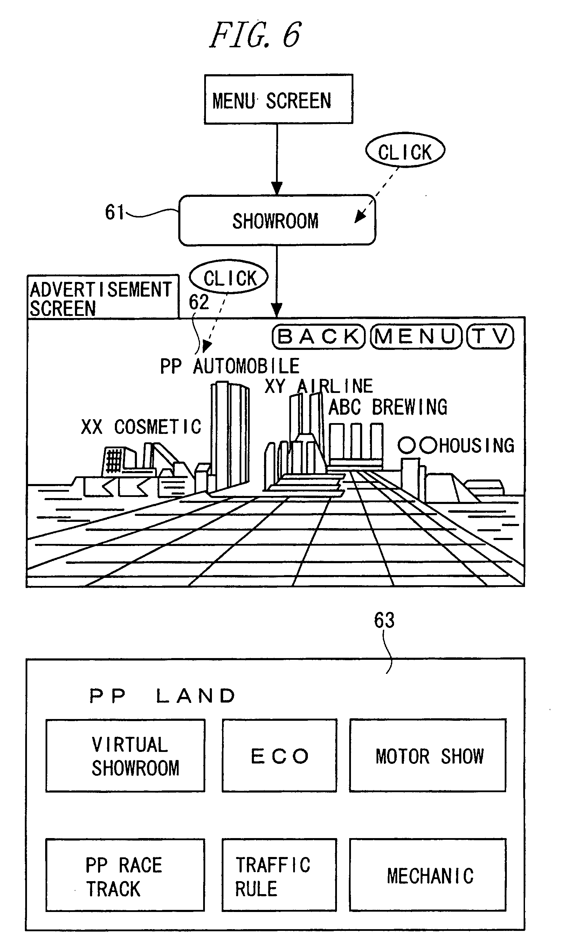

FIG. 6 shows a display screen in the case of clicking a showroom 61 in the program guide display 5 (See FIG. 2). This screen shows advertisements of the respective enterprises. The viewer clicks a name (PP Automobile 62) of a given enterprise displayed on this screen, whereby related advertisements 63 of this enterprise are displayed on the screen. When the viewer further clicks a specified advertisement among these related advertisements 63, whereby more-and-more-detailed contents of the advertisement are displayed on the screen. The broadcast content is hierarchized in the way described above.

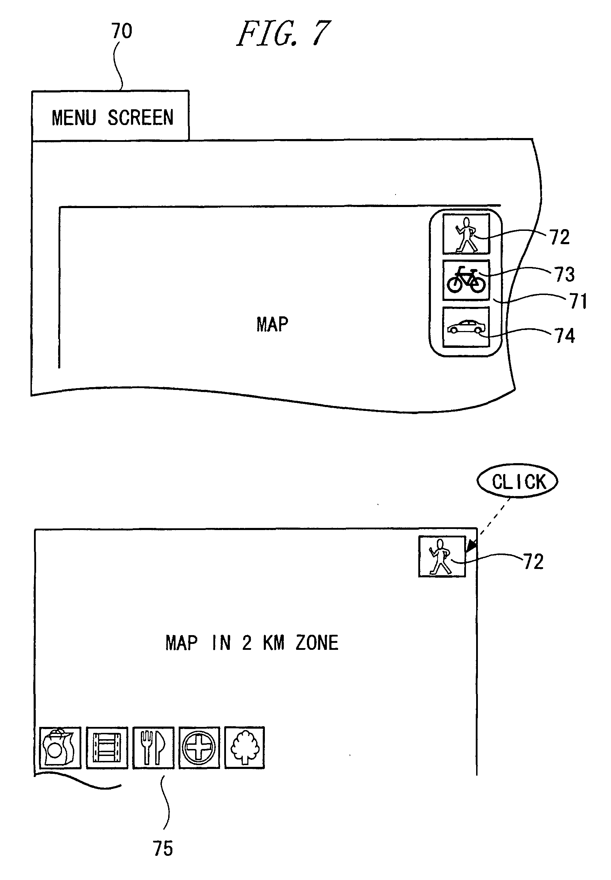

Given next in FIG. 7 is an explanation of how the viewer obtains different items of information by selecting the icons displayed on the map.

When the viewer clicks a walker mark 72 among the icons 71 on the map on the menu screen 70, a map (which is called a walking map) in a walking range in the vicinity of the resident area of the viewer, e.g., in a range of 2 km around the hose of the viewer. The advertisement information such as shop information is displayed on the map according to the necessity. The map around the house of the viewer is previously created/edited and stored in the storage means 3. Similarly, when the viewer clicks a bicycle mark 73 among the icons 71, a map (which is called a bicycle map) in a bicycle traveling range, e.g., a range of 5 km is displayed. Further, when a car mark 74 is clicked, a map (which is called a car map)in a car traveling range, e.g., a range of 10 km is displayed.

Then, on the maps in the respective ranges, the viewer clicks a necessary icon among a variety of icons 75 (for instance, an icon of shopping bag in the case of shopping, an icon of fork and knife in the case of cooking, an icon of "+" in the case of a hospital and an icon of tree in the case of the nature) displayed, thereby displaying contents of icon-related information and icon-related maps such as an area map indicating a shopping-related display and locations of the shops, a map indicating a restaurant-related display with advertisements and locations thereof in accordance with the respective ranges of the walker, the bicycle and the car. This facilitates providing conveniences to the viewers.

Further, on the map, a sense of seasons may be expressed by displaying, for instance, cherry blossoms bloomed, flying birds visiting, snow accumulated in synchronization with a change of the actual season. This scheme makes it possible to provide the information useful for the daily life in a way that gives the sense of season to the living of the user.

On the occasion of utilizing the life map, if the advertiser is burdened with all the costs or a part thereof, the user can obtain the latest information without any burden of the costs or at a lower cost.

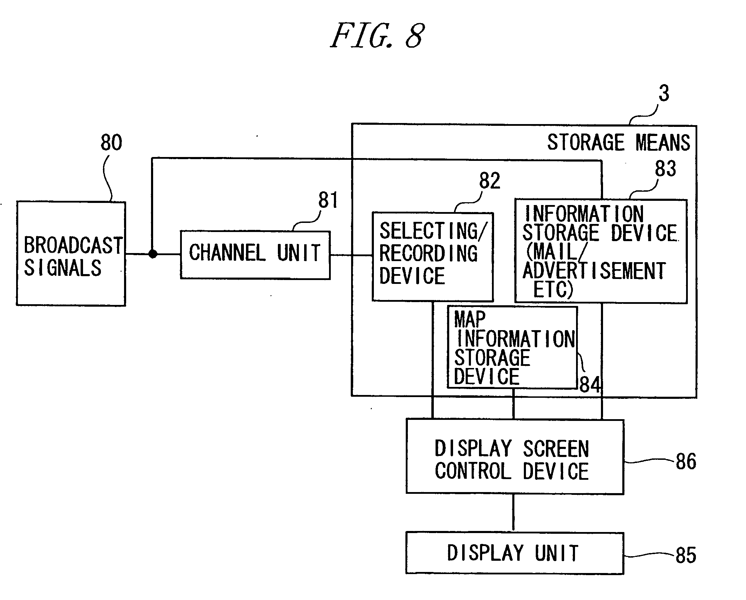

FIG. 8 is a block diagram of a characteristic portion of the receiving device 2 in this embodiment. As shown in FIG. 8, the receiving device 2 includes a channel unit 81 for selecting a broadcasting station to be received, a storage means 3 for storing the programs etc received, a display unit 85 for displaying the programs received and the programs etc stored in the storage means 3, and a display control unit 86 that controls displaying on the display unit 85.

Further, the storage means 3 further includes a selecting/recording device 82 for storing the content selected by the channel unit 81, an information storage device 83 for receiving and storing the data broadcast, and a map information storage device 84 for storing the map information.

The channel unit 81 selects a program of a target broadcasting station from among broadcast signals 80. Then, only, e.g., the news, the weather forecast and the traffic information are recorded on and rewritten several times everyday to the selecting/recording device 82. On the other hand, the mails, the advertisement information and others are recorded on the information storage device 83 separately from the broadcast signals 80 (data broadcasts). Further, the map information is stored beforehand on the map information storage device 84. These pieces of information are displayed on the display unit 85 of the receiving device 2 by a display screen control device 86.

### «Second Embodiment»

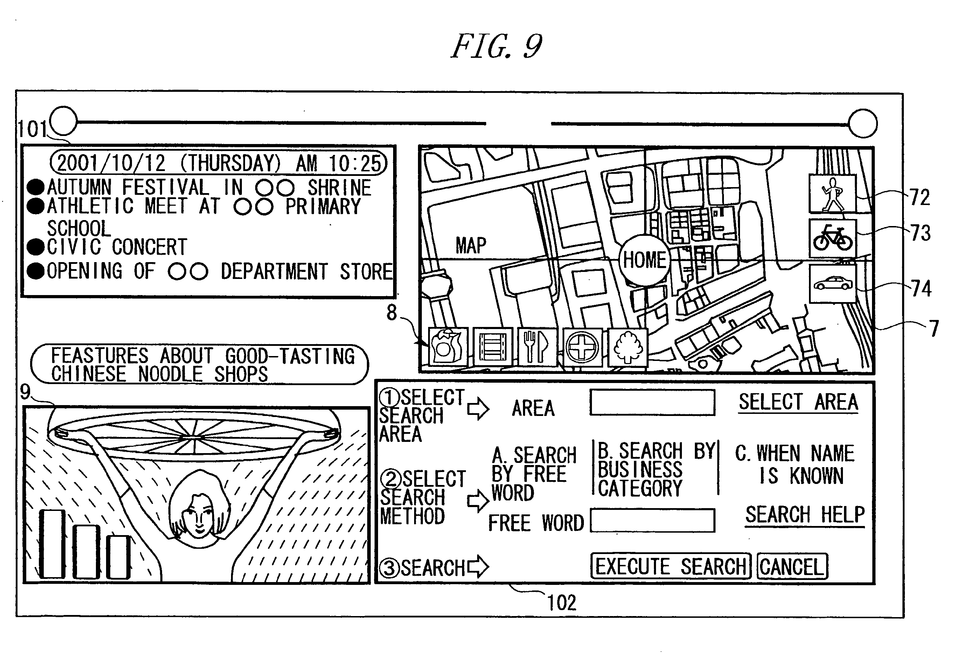

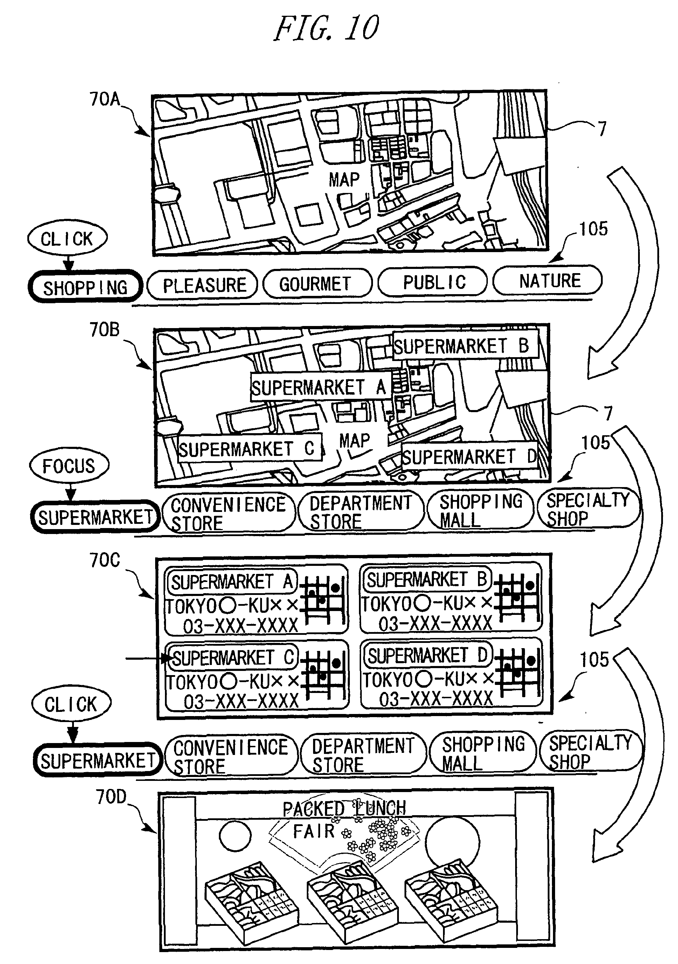

A second embodiment of the present invention will be explained with reference to the drawings in FIGS. 9 through 24. The first embodiment discussed above has explained the receiving device 2 for providing the life map. This embodiment will explain the receiving device 2 capable of manipulating the life map by use of an icon bar 105 (see FIG. 10) defined as an array of icons. This embodiment will further explain a procedure of providing the information containing a time concept on the basis of the life map. Other configurations and operations are the same as those in the first embodiment, and FIGS. 1 through 8 are referred to according to the necessity.

### <Layout of Screen>

FIGS. 9 through 11 show examples of screen layout of the "life map" and examples of manipulations on the screen. FIG. 9 shows an initial screen of the "life map". When the viewer presses a predetermined button of the remote controller 4, this initial screen is displayed.

This initial screen contains an event display unit 101, a title of a feature (written as "Feature about Good-Tasting Chinese Noodle Shops") and an advertisement screen 9 from an upper part down to a lower part on the left side on the screen. Further, this initial screen contains an area map 7 in an upper part and an information search screen 102 in a lower part on the right side on the screen.

Events in the areas for a predetermined period of time are displayed in the event display unit 101. Referring to FIG. 9, the area information is displayed from day to day. A date and a present time are displayed such as "Oct. 12 (Thursday), 2001, AM 10:25". Then, event titles such as a festival of the ○○ shrine, an athletic meet, a civic concert or opening of the ○○ department store, are displayed under this date/time display.

The title of every event is link to the detailed information. The viewer can access the detailed information by tracing the link. Further, the viewer can change an update interval of this event display unit 101. For instance, as shown in FIG. 9, it is possible to set such as weekly updating or monthly updating in addition to the change on the day-to-day basis.

The title of the feature (written as "Feature about Good-Tasting Chinese Noodle Shops") is updated at a predetermined interval. This title also servers as a link to the detailed information. The viewer can access the detailed information on the feature by tracing the link.

The information search screen 102 provides a function of searching information on the area in accordance with conditions specified by the viewer, and displaying the concerned information on the map. At first, the viewer specifies a search target area. The viewer can specify an area name, a post code and others as area information. If the viewer omits specifying the area, the resident area of the viewer is to be selected.

Next, the viewer specifies a search method. There are provided three types of search methods such as (A) searching by specifying a free word, (B) searching by specifying a business category and (C) searching based on a name of the search target.

For example, if the viewer desires to obtain information on a fitness club, the viewer may specify "fitness club" in a box of the free word. Further, the viewer may select the fitness club from the business categories. Moreover, if names of target fitness clubs such as the ○○ club, the XX gym etc are known, the viewer may select the facility by name.

If the viewer does not specify the search method, the icon bar 105 (see FIG. 10) that limits the search targets is displayed. The viewer selects the icon bar 105 and is thereby able to narrow down the search targets. The advertisement screen 9, the area map 7 and others are the same as those in the first embodiment, and hence their explanations are omitted.

FIG. 10 shows a procedure of limiting the information by use of the icon bar 105. As described above, when the viewer does not specify the search method and execute searching, or when the viewer specifies "display of classified information" in an unillustrated menu, a screen 70A drawn in an upper part in FIG. 7 is displayed. This screen 70A is configured by the area map 7 and the icon bar 105.

The icon bar 105 is displayed under the area map 7 and contains a plurality of icons arranged in one line. Referring to FIG. 10, the icons labeled with, for instance, "shopping", "pleasure", "gourmet", "public" and "nature" are displayed.

The viewer can select any one of the icons of the icon bar 105 by use of the remote controller 4. The selected icon is displayed in a way that enhances an icon frame. The viewer can change the selection target icon by manipulating an arrowhead button. A state where the icon thus becomes the selection target, is also called a "focused state".

When the viewer focuses a specified icon, e.g., the "shopping" icon and presses an unillustrated "decision" button, a screen 70B is displayed. The click means herein pressing the decision button of the remote controller 4 in the state where the specified icon or menu etc is focused.

The area map 7 on the screen 70B is the same as in the case of the screen A. The labels of the respective icons of the icon bar 105 are, however, changed into a "supermarket", a convenience store", a "department store", a "shopping mall" and a "specialty store".

Supposing herein that the viewer focuses the icon labeled with, e.g., "supermarket" by manipulating the arrowhead button of the remote controller 4, the icons (corresponding to symbols) of supermarkets A, B, C and D are displayed on the area map 7 on the screen 70B. Herein, the supermarkets A and others are store names of the supermarkets located at the respective points on the map.

Herein, when the viewer clicks the supermarket, a screen 70C is displayed. The screen 70C displays brief advertisements of the respective supermarkets. The screen 70C displays, for example, store names, addresses, telephone numbers, business hours, regular holidays and rough maps indicating locations thereof.

This brief advertisement serves as a link (corresponding to linking information) to the detailed information. When the viewer clicks the brief advertisement of the specified supermarket, e.g., the supermarket C, an advertisement as on a screen 70D is displayed. The advertisement shows the detailed information of this store and the events that are now held.

The viewer may select directly the icon on the area map 7 without using the icon bar. For instance, the viewer can click directly the icon on the initial screen in FIG. 9.

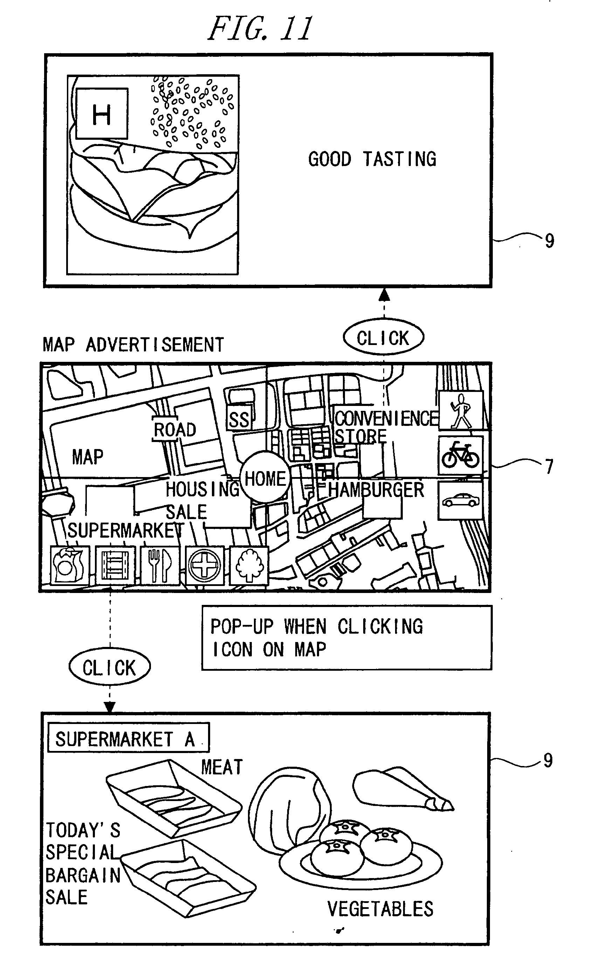

FIG. 11 shows a screen transition (which is called a general map-based advertisement) in this case. For example, when the viewer clicks an icon of a hamburger shop on the area map 7, an advertisement of this shop is displayed on the advertisement screen 9. Further, when the viewer clicks an icon of the supermarket A, an advertisement of this store, e.g., information on a today's special bargain sale is displayed on the advertisement screen 9.

### <Screen Configuring Method>

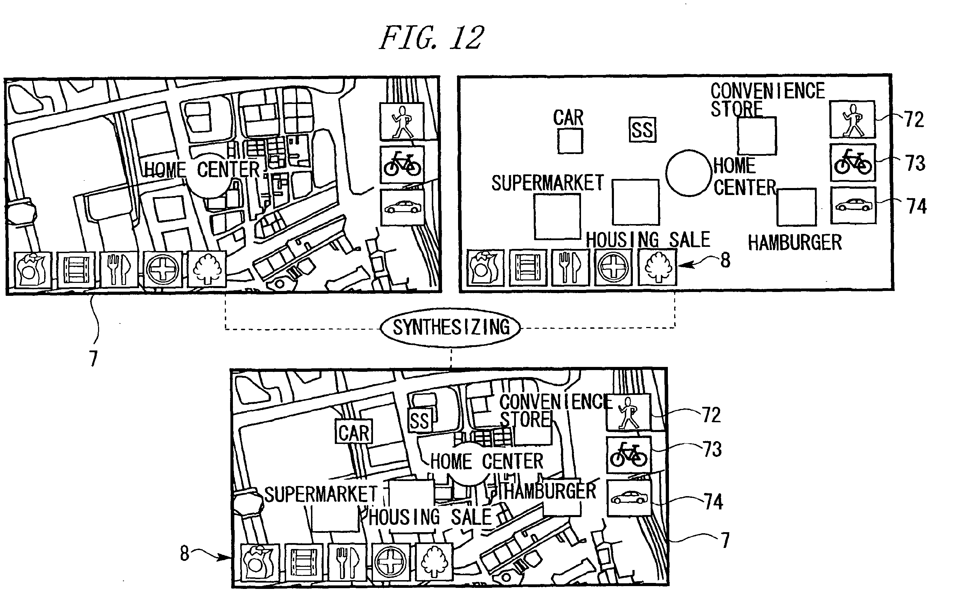

FIG. 12 shows a procedure of configuring a screen on which the area map 7 is synthesized with the icons. This screen is configured in such a way that tiers of the area map 7 and of the icon map are overlapped with each other. The icon map is a map on which only the icons are disposed at predetermined points. A walker mark 72, a bicycle mark 73, a car mark 74 and icons 8 provided at a lower part on the screen within the icon map, are pre-installed when delivering the receiving device 2. This screen is referred to as a mother map.

By contrast, other icons representing, for instance, the supermarket A, the hamburger shop, a car dealer, a home center and a housing sales company are distributed through on the data broadcast.

The receiving device 2 receives these icons together with longitudes and latitudes on the map, an advertisement period, a brief advertisement or a detailed advertisement. Then, the receiving device 2 draws the icon map on which these icons are disposed at the predetermined points for this advertisement period. Then, the receiving device 2 displays the area map 7 to the viewer in a way that superposes the icon map on the mother map.

### <Architecture of Broadcast System>

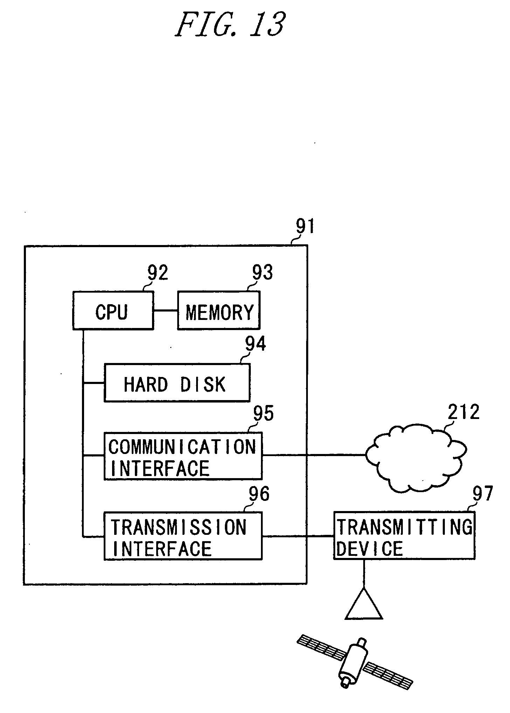

FIG. 13 shows a diagram of a hardware architecture of a broadcast system. This broadcast system includes a content distribution server 91 for distributing contents through on satellite broadcasts, and a transmitting device 97 for transmitting the contents to an artificial satellite.

As in FIG. 13, the content distribution server 91 has a CPU 92 for executing a content distribution program, a memory 93 for temporarily storing the program executed by the CPU 92 and the data, a hard disk 94 for recording the contents to be distributed and control information used when distributing them, a communication interface 95 used for performing bidirectional communications with the receiving device 2 of the viewer via a network 212, and a transmission interface 96 that connects the CPU 92 to the transmitting device 97.

The CPU 92 executes the content distribution program, thereby providing a function as the content distribution server 91. For example, the CPU 92 stores the contents in the hard disk 94 and distributes the contents in a predetermined procedure.

The contents are, for example, the advertisements displayed in the form of the map-based advertisement described above, the information on the events held on predetermined dates for a predetermined period, the weather information, the seasonal information, the incident information, the traffic information, the public information and so on. The CPU 92 synthesizes the information such as the advertisement and the icons with a longitude and a latitude of the location of the shop concerned and the event information, whereby the synthesized information is repeatedly broadcast as a data carousel.

The content is broadcast through the transmitting device 97 connected to the transmission interface 96 and the artificial satellite as well. Further, the CPU 92 performs the bi-directional communications with the network 212 via the communication interface 95.

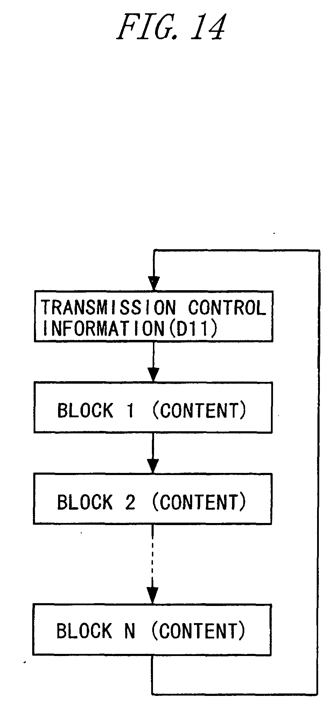

FIG. 14 shows a structure of the data that are broadcast by the broadcast system described above. The same content is repeatedly distributed in this broadcast. This repetitive broadcasting method is called a carousel method. This method is defined in IOS/IEC13818-6. According to the carousel method, transmission control information (DII (Download-Info-Indication) message) and a plurality of blocks are repeatedly broadcast. The content is distributed in separation into the respective blocks.

### <Architecture of Receiving Device 2>

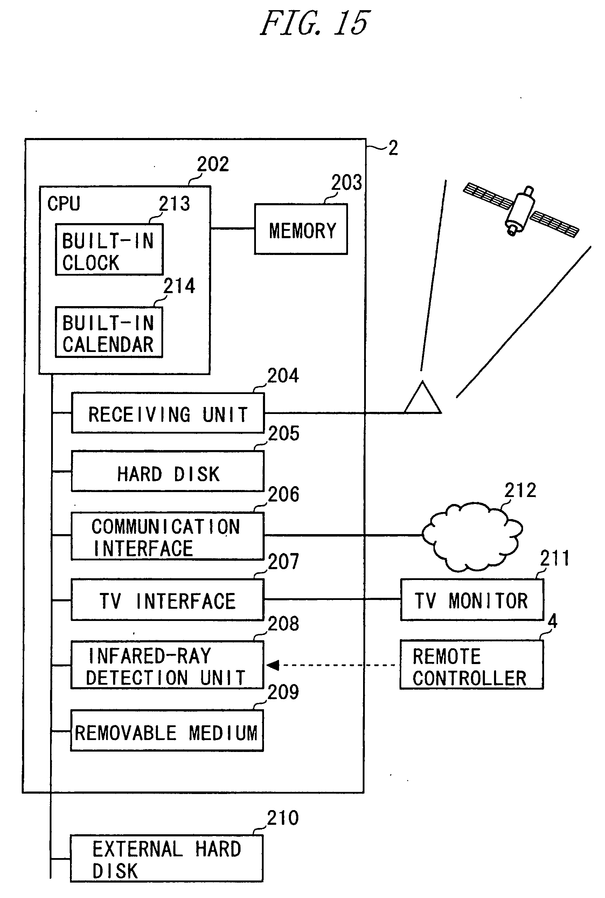

FIG. 15 shows a hardware architecture of the receiving device 2 (set-top box) in this embodiment. The receiving device 2 in this embodiment includes a CPU 202 for executing a content receiving program and providing a function as the receiving device 2, a memory 203 for temporarily storing the program executed by the CPU 202 and the data, a receiving unit 204 for receiving a broadcast from the artificial satellite, a hard disk 205 for storing the contents contained in the data received, a communication interface 206 used for performing the bidirectional communications with the server such as the content distribution server 91 via a network 212, a TV interface 207 outputting the received content to a TV monitor, and an infrared-ray detection unit 208 detecting an operation signal from the remote controller 4.

The CPU 202 executes the content receiving program, thereby providing a function as the receiving device 2. For instance, the CPU 202 distinguishes between pieces of data received by the receiving unit 204, and stores necessary pieces of data in the hard disk 205. Further, the CPU 202, based on the manipulations on the remote controller 4, outputs the content stored in the hard disk 205 to the TV monitor 211.

Moreover, the CPU 202 performs the bidirectional communications with the content distribution server 91 through the communication interface 206.

A removal medium 209 and an external hard disk 210 are connected as extension storage areas to this receiving device 2. This removal medium 209 may involve the use of, e.g., a DVD-RW, a DVD-RAM, a CD-R, a CD-RW and a flash memory card.

### <Data Structure>

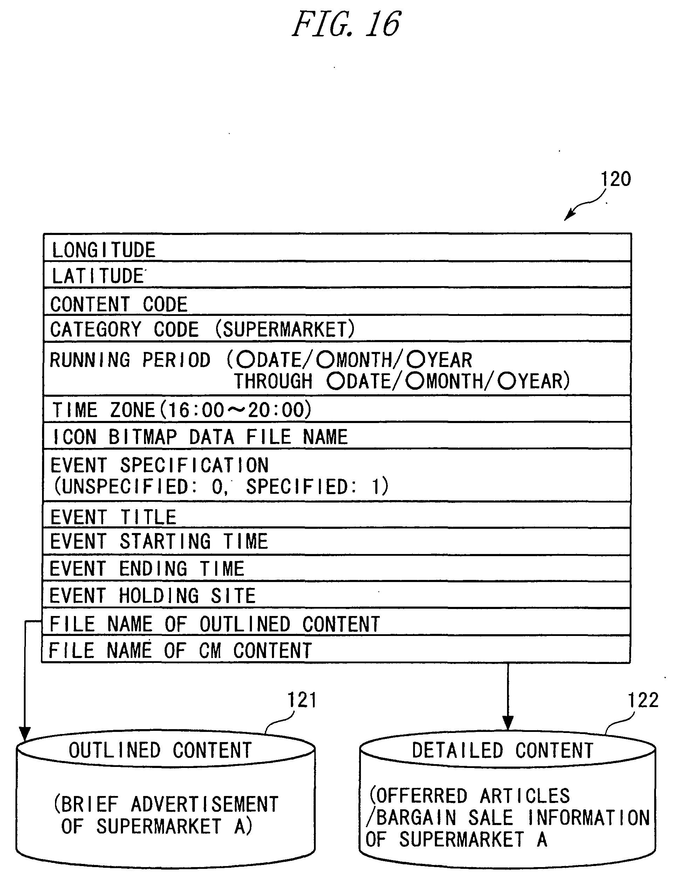

FIG. 16 shows a structure of the content edited by the content server 91 described above. This content is transmitted as a carousel-based block from the transmitting device 97 and received by the receiving device 2.

This content is structured of a content header 120, an outlined content 121 and a detailed content 122.

The content header 120 contains a longitude, a latitude, a content code, a category code, a running period, a time zone, an icon bitmap data file name, an event specification, an event title, an event starting date, an event ending date, an event holding site, a file name of the outlined content 121, and an file name of the detailed content 122.

The longitude and the latitude are a longitude and a latitude of the location of the object described by the content. For example, if the content is an advertisement of the supermarket A, the longitude and the latitude where this supermarket A is located, are shown therein.

The content code is a unique character string for identifying the content concerned. The category code is a code for categorizing the content concerned. The category code is hierarchically described such as a major category, an intermediate category and a minor category. For example, if the content is the advertisement of the supermarket A, the description is that the major category is "shopping", the intermediate category is "supermarket", and the minor category is "nothing applied".

The running period is a period for which the content concerned is displayed. This may be, if the content is, e.g., the advertisement, defined as an advertisement period. The advertisement period is set by a content distributor or producer on the basis of a contract with the advertiser.

The time zone is a time zone proper to displaying the content concerned. For instance, if the content is an advertisement of a packed lunch, a time zone in the morning is specified.

The file name of the icon bitmap data is a file name of the bitmap data describing the icons arranged on the map. The bitmap data are also broadcast by the carousel method. The icons are disposed in positions defined by the longitudes and latitudes on the map.

The event specification is an specification for clarifying whether the content header 120 contains event information on the event. This event is an event normally related to a description target of the content concerned. For example, if this content is the advertisement of the supermarket A, the content header 120 may contain the event information on the event that is to be held at the supermarket A. Pieces of event information are elements under the event specification in the content header 120, i.e., an event tile, an event starting date, an event ending date and an event holding site.

The event starting time and the event ending time among these elements are used as a display period on the event display unit shown in FIG. 9. Further, they are used as a running period of an advertisement on a screen 70D shown in FIG. 10, e.g., information on the special bargain sale etc.

The outlined content 121 is, for instance, a brief advertisement as seen on a screen 70C in FIG. 10. The outlined content 121 is also distributed based on the carousel method, and is, with a predetermined file name given, recorded on the hard disk 205. The file name of the outlined content 121 is a file name of a file that retains the outlined content 121 described above.

The file name of the detailed content 122 is a file name of a file containing the content itself that is managed in the content header 120 concerned. For example, the advertisement shown on a screen 70D in FIG. 10 is the detailed content 122. The detailed content is distributed likewise based on the carousel method.

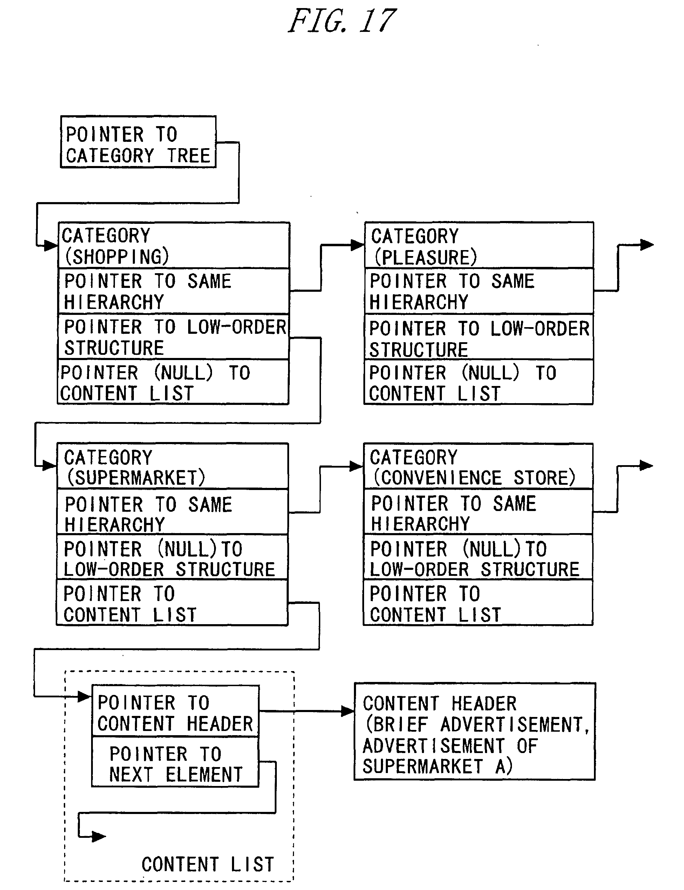

FIG. 17 shows a structure of a category tree for categorizing the contents. The category tree is set in the hard disk 205 when delivering the receiving device 2. Further, if the category tree is altered, the altered elements are distributed through on the data broadcast. The viewer may download the category tree from the network 212 via the communication interface 206.

The tree structure of the category tree is configured by linking pointers to the elements indicating categories of the contents. A head element of the tree structure (which is called a root of the tree structure) is pointed by the pointer to the tree structure.

Each element consists of a category, a pointer to the same hierarchy, a pointer to a low-order hierarchy and a pointer to a content list.

The category is a character string indicating the category of the content such as shopping, pleasure, supermarket, convenience store etc. Further, the pointer to the same hierarchy links the elements showing a plurality of categories belonging to the same hierarchy.

Moreover, the pointer to the low-order hierarchy links the elements indicating the categories having a low-order relationship, e.g., the intermediate category with respect to the major category.

Then, the categories by the element corresponding to the root and by the elements on the same hierarchy, correspond to the major categories. For example, the shopping, the pleasure etc correspond to the major categories. Further, the hierarchy lower one tier than the hierarchy corresponding to the root, corresponds to the intermediate category. For instance, the supermarket, the convenience store etc correspond to the intermediate categories.

With respect to the element at the terminal, e.g., the element having no element to be linked next on the same hierarchy, NULL is set in the pointer to the same hierarchy. Moreover, NULL is set in the pointer to the low-order hierarchy similarly with respect to the element with no element to be linked to the low-order. Arbitrary one or more hierarchies can be expressed by the structure described above. Accordingly, the categories are not fixed to the three hierarchies such as the major category, the intermediate category and the minor category in this embodiment.

The content list is a list of the pointers that point the contents coming under the categories described above. Each of the elements in the content list consists of a pointer to the content header 120 and a pointer to the next element. The pointer to the content header 120 points the content header 120 of the content coming under the category concerned. For example, the content header 120 of the advertisement of the supermarket A is pointed.

Moreover, the pointer to the next element links the next element. A plurality of contents coming under the category concerned can be thereby linked.

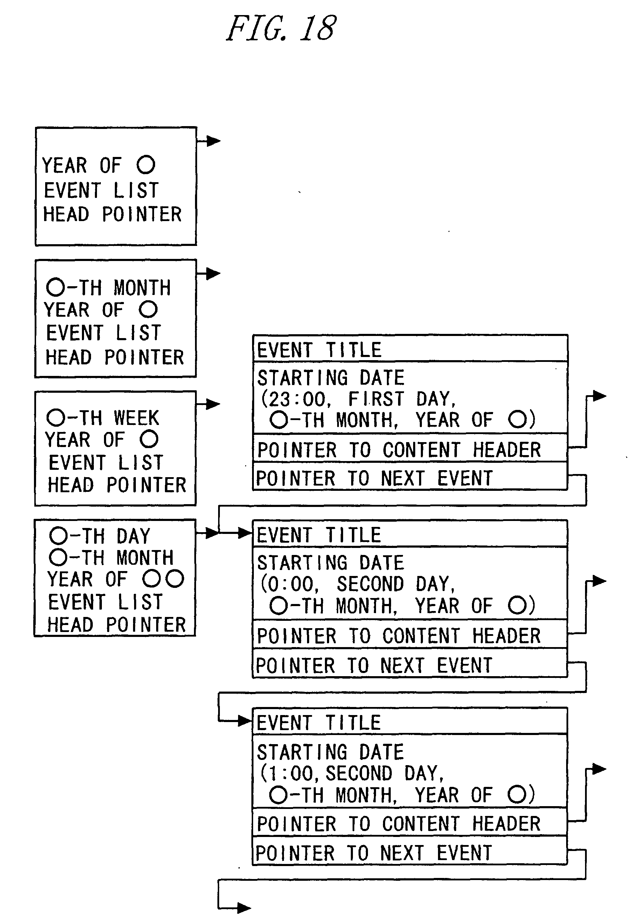

FIG. 18 shows a structure of the event list. The event list is a list used for the receiving device 2 to manage the events in time series. When the event is described in the content received, the receiving device 2 registers this event in the event list.

The event list is defined as a one-dimensional list in which the elements describing the respective events are linked by the pointers. Each element of the event list consists of an event title, a starting time, a pointer to the content header 120 and a pointer to the next event.

The event title and the starting time are those copied from the content header 120 (see FIG. 16) received. The pointer to the content header 120 links the content header 120 to the event list.

The pointer to the next event links the elements describing the respective events. The event list is so structured as to link the respective elements in the sequence of the event starting date. Further, head pointers point head events of each year, each month, each week and each day. The receiving device 2 is accessible to the event information of the events of each year, each month, each week and each day in the sequence of the starting time by tracing the respective head pointers.

### <Operation and Effect>

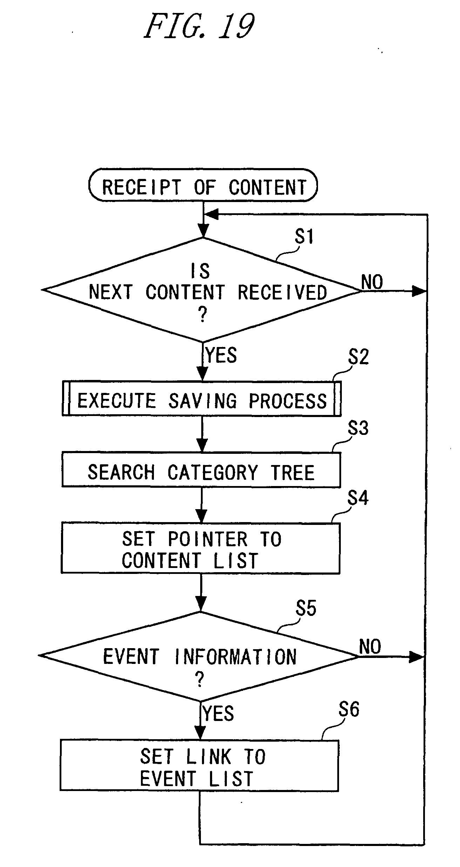

FIG. 19 is a flowchart showing a content receiving process executed by the CPU 202 of the receiving device 2. In the content receiving process, the CPU 202 monitors whether the content is normally received (S1). When the content is received , the CPU 202 executes a process of saving the content in the hard disk 205 (S2).

Next, the CPU 202 searches the category tree in accordance with the category code of the content header 120 (S3). Then, the CPU 202 sets a link to the content header 120 in the content list in the corresponding category of the category tree (S4).

Next, the CPU 202 judges whether the content header 120 contains the event information (S5). If the event information is not contained, the CPU 202 loops the control back to S1.

Whereas if the event information is contained, the CPU 202 sets the link to the content header 120 in a position of the starting date within the event list (S6). Thereafter, the CPU 202 loops the control back to S1.

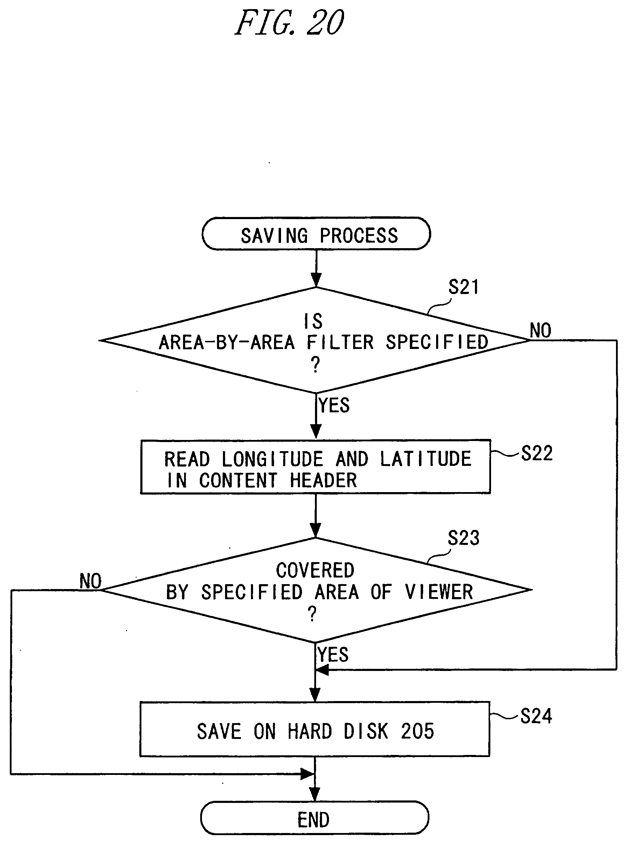

FIG. 20 shows the saving process (the process in S2 in FIG. 19) in detail. Inthis process, the CPU 202, at first, judges whether an area-by-area filter is specified. The area-by-area filter is a filtering function receiving only the contents distributed to the specified areas. The viewer, if having no desire for receiving the contents distributed to the areas other than the resident area of the viewer, specifies the area-by-area filter.

If the area-by-area filter is not specified, the CPU 202 advances the control to S24. Whereas if the area-by-area filter is specified, the CPU 202 reads a longitude and a latitude from the content header 120 (see FIG. 16) (S23).

Next, the CPU 202 judges whether the specified area of the viewer covers these longitude and latitude (S23). This may be attained by recording the longitude and the latitude as coordinates of a left upper point and a right lower point of a rectangular region including the specified area of the viewer, and by judging whether this rectangular regions covers the longitude and the latitude indicated in the content header 120.

If the area specified by the viewer does not cover the above longitude and latitude, the CPU 202 directly finishes the process. This is because the content is ruled out of the area specified by the viewer.

While on the other hand, if the area specified by the viewer covers the above longitude and latitude, the CPU 202 saves this content in the hard disk 205 (S24). Thereafter, the CPU 202 finishes the process.

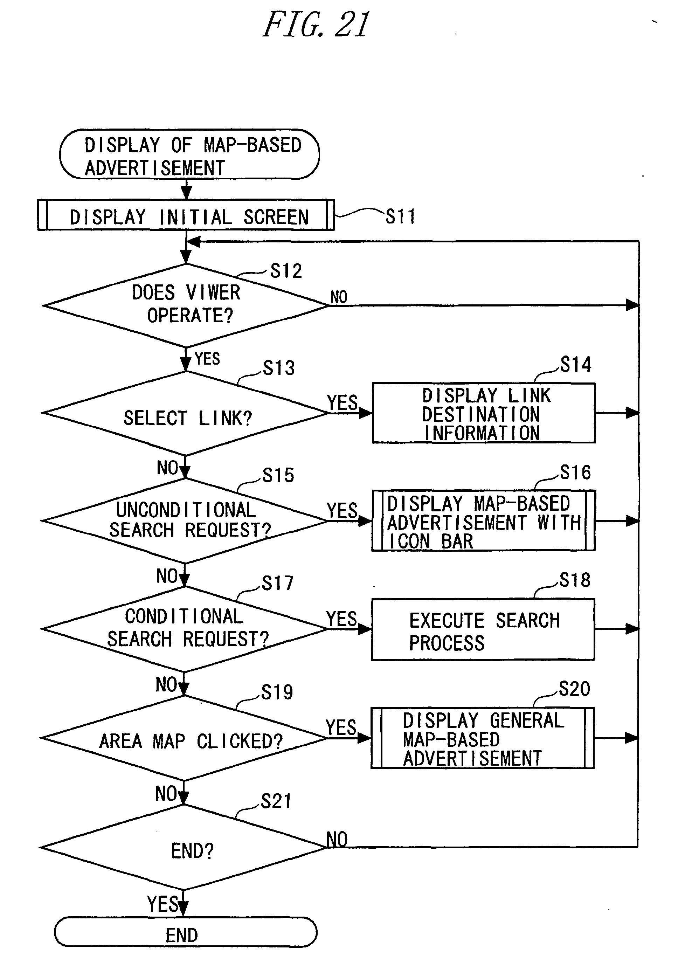

FIG. 21 is a flowchart showing a map-based advertisement display process executed by the CPU 202. In this process, the CPU 202, to begin with, displays the initial screen (see FIG. 9) (S11).

Next, the CPU 202 waits for the viewer to operate (S12). When the operation of the viewer occurs, the CPU 2 02 judges whether this operation is a link selection (S13). If the operation of the viewer is the link selection, the CPU 202 displays information of a link destination (S14). Thereafter, the CPU 202 returns the control to S12.

Where as if the operation of the viewer is not the link selection, the CPU 202 judges whether the operation of the viewer is a unconditional search request (S15). The unconditional search request means a request in a case where a search button is pressedwithout specifying a search method (such as specifying a keyword and selecting a business category) on an information search screen 102 in FIG. 9.

If the operation of the viewer is the unconditional search request, the CPU 202 displays the map-based advertisement with the icon bar (S16). In this process, the viewer searches for a desired item of information by manipulating the icon bar. Thereafter, the CPU 202 returns the control to S12.

Whereas if the operation of the viewer is not the unconditional search request, the CPU 202 judges whether the operation of the viewer is a conditional search request (S17). If the operation of the viewer is the conditional search request, the CPU 202 executes the search process (S18). A result of the search is displayed by using the icon on the map. The viewer obtains the desired item of information by manipulating the icon. Thereafter, the CPU 202 returns the control to S12.

Whereas if the operation of the viewer is not the conditional search request, the CPU 202 judges whether the operation of the viewer is a click on the area map 7 (S19). If the operation of the viewer is the click on the area map 7, the CPU 202 displays a general map-based advertisement on the entire screen of the TV monitor 211 (S20). The viewer obtains a desired item of information by manipulating the icon on the area map 7. Thereafter, the CPU 202 returns the control to S12.

Whereas if the operation of the viewer is not the click on the area map 7, the CPU 202 judges whether the operation of the viewer is an end indication (S21). If the operation of the viewer is the end indication, the CPU 202 finishes the process of displaying the map-based advertisement. Whereas if the operation of the viewer is not the end indication, the CPU 202 returns the control to S12.

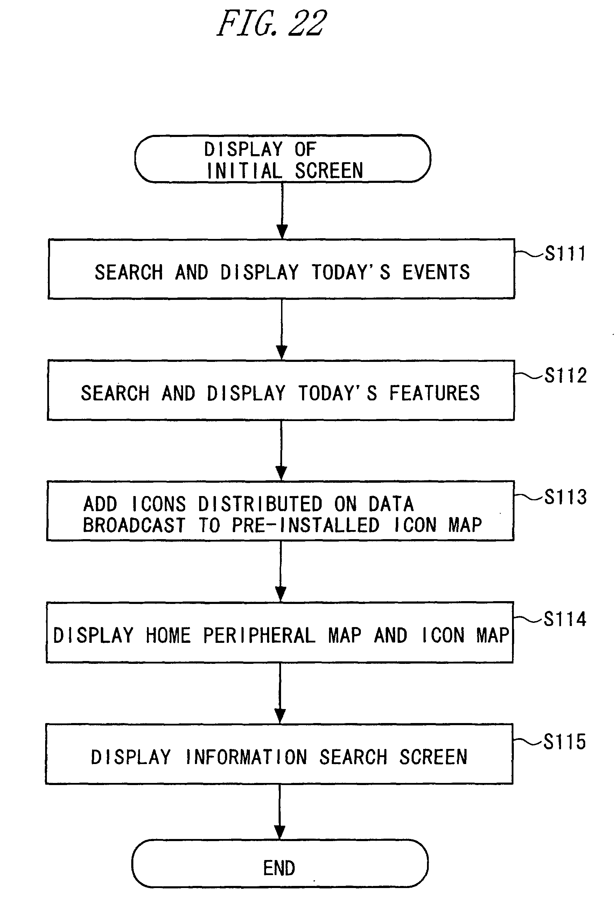

FIG. 22 shows an initial screen display process (S11 in FIG. 21) in detail. In this process, to start with, the CPU 202 searches for today's events and displays them (S111). With setting by the viewer, however, the CPU 202 also has a function of displaying events of this year, events of this month and events of this week. Next, the CPU 202 searches for today's features and displays them (S112).

Next, the CPU 202 adds the icons distributed through on the data broadcast to the preinstalled icon map (S113). Next, the CPU 202 displays the area map 7 in the vicinity of the viewer' s own home and the icon map (S114).

Next, the CPU 202 displays the information search screen 102 (S105). Thereafter, the CPU 202 finishes the process.

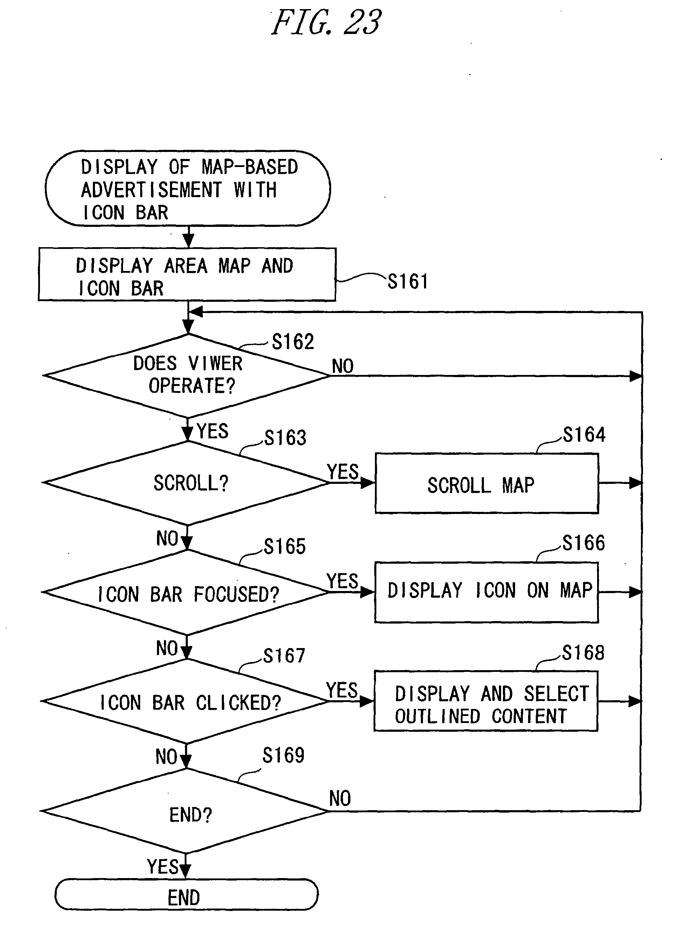

FIG. 23 shows the icon bar attached map-based advertisement display process (S16 in FIG. 21) in detail. In this process, the CPU 202 at first adds the icon bar to the lower part on the area map 7 and displays it (S161). Thereafter, the CPU 202 waits for the viewer to operate (S162).

When detecting the operation of the viewer, the CPU 202 judges about a type of this operation. To begin with, the CPU 202 judges whether the operation of the viewer is a scroll on the map (S163). If the operation of the viewer is the scroll on the map, the CPU 202 scrolls the area map 7 (S164). Thereafter, the CPU 202 returns the control to S162.

Whereas if the operation of the viewer is not the scroll on the map, the CPU 202 judges whether the operation of the viewer is a focus on the icon bar (S165). If the operation of the viewer is the focus on the icon bar, the CPU 202 displays an icon corresponding to the focused icon at the point on the area map 7 (S166).

For example, if the focused icon is the icon of the supermarket, the CPU 202 displays the icons of the supermarkets A, B, C etc positioned at the respective points on the area map 7. If the icon corresponding to the focused icon is not stored, however, the CPU 202 displays nothing. Thereafter, the CPU 202 returns the control to S162.

If the operation of the viewer is not the focus on the icon bar 105, the CPU 202 judges whether the operation of the viewer is a click on the icon bar 105 (S167). If the operation of the viewer is the click on the icon bar 105, the CPU 202 displays the outlined content 121 (e.g., the brief advertisement on the screen 70C shown in FIG. 10). The viewer, if necessary, has the detailed content 122 displayed (which is, e.g., the advertisement on the screen 70D illustrated in FIG. 10). Thereafter, the CPU 202 loops the control back to S162.

If the operation of the viewer is not the click on the icon bar, the CPU 202 judges whether the operation of the viewer is an end indication (S169). If the operation of the viewer is not the end indication, the CPU 202 executes nothing and returns the control to S162. Whereas if the operation of the viewer is the end indication, the CPU 202 finishes the process.

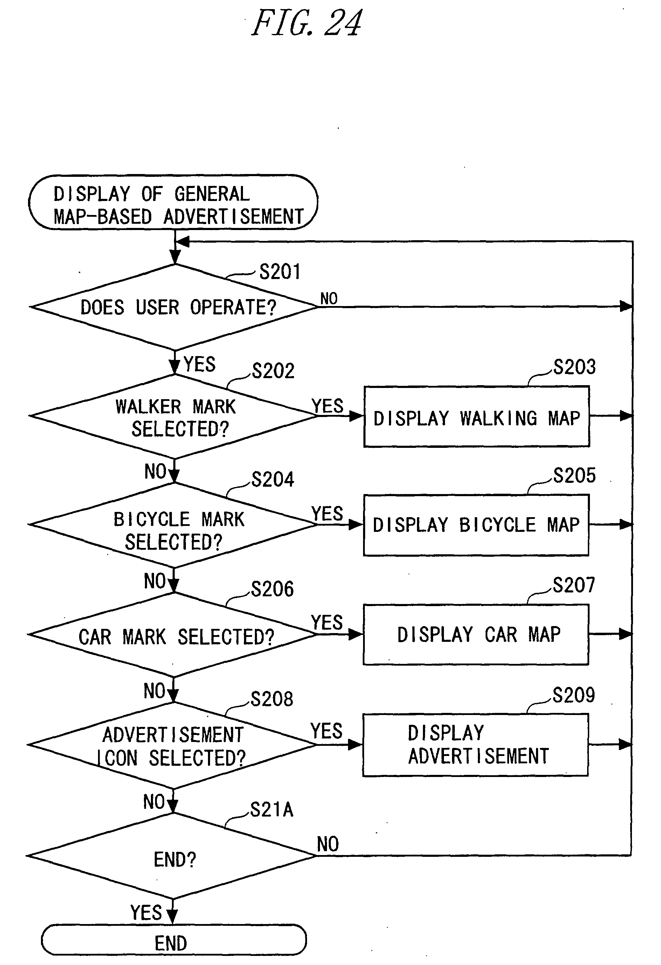

FIG. 24 shows the general map-based advertisement display process. In this process, the CPU 202 displays a walker mark 72, the bicycle mark 73, the car mark 74 and other icons 8 (see FIG. 11) on the area map 7. The CPU 202 waits for the viewer to operate (S201). When detecting the operation of the viewer, the CPU judges about a type of this operation.

To start with, the CPU 202 judges whether the operation of the viewer is a selection of the walker mark 72 (S202). If the operation of the viewer is the selection of the walker mark 72, the CPU 202 displays a walking map, i.e., the area map 7 covering a walking range in the vicinity of the resident area of the viewer. The viewer obtains a desired item of information on the walking map. Thereafter, the CPU 202 returns the control to S201.

If the operation of the viewer is not the selection of the walker mark 72, the CPU 202 judges whether the operation of the viewer is a selection of the bicycle mark 73 (S204). If the operation of the viewer is the selection of the bicycle mark 73, the CPU 202 displays a bicycle map, i.e., the area map 7 covering a bicycle traveling range in the vicinity of the resident area of the viewer (S205). The viewer obtains a desired item of information on the bicycle map. Thereafter, the CPU 202 returns the control to S201.

If the operation of the viewer is not the selection of the bicycle mark 73, the CPU 202 judges whether the operation of the viewer is a selection of the car mark 74 (S206). If the operation of the viewer is the selection of the car mark 74, the CPU 202 displays a car map, i.e., the area map 7 covering a car traveling range in the vicinity of the resident area of the viewer (S207). The viewer obtains a desired item of information on the car map. Thereafter, the CPU 202 returns the control to S201.

Whereas if the operation of the viewer is not the selection of the car mark 74, the CPU 202 judges whether the operation of the viewer is a selection of the icons 8 for the advertisement (S208). If the operation of the viewer is the selection of the icon for the advertisement, the CPU 202 displays the advertisement (S209). The CPU 202, when displaying this advertisement, refers to a built-in calendar 214 and a built-in clock 213 and displays pieces of information matching with the season and the time such as seasonal articles, the information on the today's bargain sale, a menu of today's packed lunch and others. Thereafter, the CPU 202 returns the control to S201.

As explained above, the broadcasting system in this embodiment distributes the content in a way that synthesizes the content such as the advertisement information etc with the longitude and the latitude. As a result, the content can be displayed on the area map 7 of the receiving device 2 receiving this content.

Further, this broadcasting system distributes the content such as the advertisement information etc in a way that synthesizes the content with the time information such as the running period, the event starting time, the event ending time etc. As a result, the content can be displayed within the predetermined period in a way that matches with the event holding time, and the advertisement can be also displayed matching with the timing on the receiving device 2 receiving this content.

On the other hand, the receiving device 2 in this embodiment has the area map 7, and has the received content such as the advertisement etc displayed in the position on the map. Accordingly, this receiving device 2 displays the content closely fitted to the local area. As a result, the viewer can easily obtain the information deeply related to the viewer's resident area.

Further, the receiving device 2 in this embodiment displays the icon bar 105 together with the area map. As a consequence, the viewer is guided to the icon bar 105 and can reach the desired item of information among the great quantity of information developed on the map.

Moreover, this receiving device 2 extracts the event information from the content received and informs the viewer of the event information matching with the start of this event. Further, the receiving device 2 refers to the its built-in calendar 214 and built-in clock 213 and displays the information corresponding to the season and the time on the map. Consequently, the viewer can obtain the information suited to every season and time.

Further, this receiving device 2 filters and thus saves the content related to the local area in accordance with the specification by the viewer. As a result, this receiving device 2 reduces a waste of the areas on the hard disk 205 and others.

### <Modification of Hardware Architecture>

According to the embodiment described above, the receiving device 2 (set-top box) receives the content through on the data broadcast and displays the content together with the area map 7. The embodiment of the present invention is not, however, limited to the architecture given above. For instance, the receiving device 2 may be what the TV monitor 211 is integral with the receiving unit 204 as in the first embodiment. In this case, the storage area may be the hard disk 205 within the receiving device 2 or may be the external hard disk 210. Moreover, a personal computer having a TV broadcast receiving function may also be used.

Moreover, as a substitute for the receiving device 2, the content may be distributed to and provided together with the area map 7 on a PDA (Personal Digital Assistant) via the network 212. Further, the content may be distributed to a mobile telephone, then stored on a flash memory and provided together with the area map 7.

In the embodiment discussed above, the receiving device 2 is operated by the infrared-ray remote controller 4. The embodiment of the present invention is not, however, limited to this architecture. For example, the receiving device 2 may also be operated by use of a touch panel constructed by combining a liquid crystal display with a press sensor. The icons, the menus and others may be displayed on the touch panel and selected by a pressing operation of the viewer.

In this case, the touch panel may be used as a display device in place of the TV monitor 211 or may be used together with the TV monitor 211. Especially when used for a mobile information device, the touch panel may serve as a display device and an operation unit as well.

Further, there may be used, for instance, a mouse, a trackball, a joystick, anelectrostatictouchpad, a stick-shaped acupoint or an optical pointing device as provided in the conventional personal computer.

### <Other Modified Examples>

In the embodiment discussed above, the contents are categorized based on the category tree as illustrated in FIG. 16. Further, the content coming under each category is linked by the pointer that points this content from the content list. The embodiment of the present invention is not, however, limited to this structure. For example, the structure as shown in FIG. 16 may be expressed in HTML (HyperText Markup Language) or XML (eXtensible Markup Language). Moreover, the event list shown in FIG. 17 may be expressed in HTML or XML. This type of data structure may be expressed in computer languages such as LISP (List Processor: List Processing language).

In the embodiment discussed above, the area-by-area filter is executed based on the longitude and the latitude contained in the content header 120. The embodiment of the present invention is not, however, limited to this procedure. For instance, area codes for dividing the whole country into the areas may also be set. Then, the area code of a distribution target area may be set in the content header 120. The receiving device 2, when receiving such a content, compares with an area code of an area in which the receiving device 2 itself resides, and may execute filtering. This type of area code may involve the use of a post code, and in-town and out-of-town telephone exchange numbers of the telephone.

In the embodiment discussed above, the content is distributed through on the data broadcast (data carousel) in the satellite broadcasting. The embodiment of the present invention is not, however, confined to this architecture. For example, the content may be distributed via the network 212 of the cable TV. Further, the content may be distributed through on a ground wave digital broadcast.

Moreover, the content may be distributed from a base station via a mobile telephone network, e.g., a line of IMT (International Mobile Communications) 2000.

In the embodiment discussed above, the positions in which the icons are disposed on the map are specified by the longitudes and the latitudes. The embodiment of the present invention is not, however, limited to this specifying mode. For example, a map number is defined on every specified map 7, the position where the icon is disposed may be specified by this map number and coordinates on the map.

In the embodiment discussed above, the advertisement information within the area map 7 is displayed in the hierarchized form by the icon bar 105 illustrated in FIG. 10. The embodiment of the present invention is not, however, confined to this procedure. For instance, the information at every specified point on the area map 7 may also be hierarchized.

Namely, when the customer clicks a specified point, for example, an icon (a box encompassing the character "supermarket") representing, e.g., the supermarket on the area map 7 shown in FIG. 11, the information on this supermarket may also be displayed in the hierarchized form. For instance, an option of every floor of the building of the supermarket is displayed, and a list of sales counters of every floor selected may be displayed.

In this case, the same data structure as the category tree shown in FIG. 17 may be provided corresponding to each point. Then, the information on every point may be hierarchically retained. This hierarchical display enables the viewer to easily discover a desired item of information among multiple items of every-point information at the respective points on the area map 7.

### «Readable-by-Computer Recording Medium»

The program for actualizing the function of the broadcasting system or the receiving device 2 shown in the embodiments discussed above may be recorded on a readable-by-computer recording medium. Then, the computer reads and executes the program on this recording medium, thereby functioning as the content distribution server 91 or the receiving device 2 in the broadcasting system.

Herein, the readable-by-computer recording medium embraces recording mediums capable of storing information such as data, programs, etc. electrically, magnetically, optically and mechanically or by chemical action, which can be all read by the computer. What is demountable out of the computer among those recording mediums may be, e.g., a floppy disk, a magneto-optic disk, a CD-ROM, a CD-R/W, a DVD, a DAT, an 8mm tape, a memory card, etc..

Further, a hard disk, a ROM (Read Only Memory) and so on are classified as fixed type recording mediums within the computer.

### «Data Communication Signal Embodied in Carrier Wave»

Furthermore, the above program may be stored in the hard disk and the memory of the computer, and downloaded to other computers via communication media. In this case, the program is transmitted as data communication signals embodied in carrier waves via the communication media. Then, the computer downloaded with this program can be made to function as the content distribution server 91 or the receiving device 2 in the embodiments discussed above.

Herein, the communication media may be any one of a coaxial cable and a twisted pair cable, optical communication cables, satellite communications, ground wave wireless communications, etc.

Further, the carrier waves may be DC signals, and the data communication signal embodied in the carrier wave may be any one of a modulated broadband signal and an unmodulated base band signal.

### Industrial Applicability

The present invention can be carried out in the industry of manufacturing the receiver such as the TV receiver etc for receiving the digital broadcasts or the broadcasting device for broadcasting the digital broadcasts, and in the service industry for providing the contents through on the digital broadcasts.

## Claims

1. A television broadcasting method comprising:
a step of storing a storage means of a receiving device with a program selected from within broadcast signals and general living information consisting of plural items of information on a local area base, together with an area map; and
a step of displaying on a screen an item of information selected from within the general living information together with the map.

2. A television broadcasting method according to claim 1, wherein the general living information is any one of weather information, season information, event information, incident information, traffic information, public information and advertising information on the local area base or a combination thereof.

3. A television broadcasting method according to claim 1, wherein the information displayed on the screen is a map, an advertisement, a present time, and a recorded/selected program.

4. A television broadcasting method according to claim 1, wherein a content of the recorded/selected program or the general living information is hierarchized.

5. A television broadcasting method according to claim 1, wherein an advertising object is displayed on the map displayed on the screen.

6. A television broadcasting method of broadcasting to a television receiving device having a storage device, comprising:
a step of generating distribution information by synthesizing positional information for specifying a point with general living information on this point; and
a step of distributing the distribution information together with a predetermined piece of control information,
wherein the general living information is accumulated in said television receiver.

7. A television broadcasting method according to claim 6, further comprising a step of incorporating category information for categorizing the general living information into the distribution information.

8. A television broadcasting method according to claim 6, wherein the general living information is any one of weather information, season information, event information, incident information, traffic information, public information and advertising information on the local area base or a combination thereof.

9. A television broadcasting method according to claim 6, wherein the general living information contains information for specifying a time related to the general living information, and
displaying the information is controlled based on calendar information or time information within said television receiver.

10. A television broadcasting device for broadcasting to a television receiving device having a storage device, comprising:
an information processing unit for generating distribution information by synthesizing positional information for specifying a point with general living information on this point; and
a transmission unit for distributing the distribution information together with a predetermined piece of control information,
wherein the general living information is accumulated in said television receiver.

11. A television broadcasting device according to claim 10, wherein the distribution information contains category information for categorizing the general living information.

12. A television receiver to or into which a display unit is connected or incorporated, comprising:
a map information recording unit for retaining map information;
a receiving unit for receiving general living information containing positional information for specifying a point;
a living information recording unit for recording the general living information received; and
a control unit for controlling displaying on said display unit,
wherein said control unit synthesizes the general living information with map information in accordance with the positional information and displays the synthesized information on said display unit.

13. A television receiver according to claim 12, wherein the general living information is any one of weather information, season information, event information, incident information, traffic information, public information and advertising information in a local area covering the point or a combination thereof.

14. A television receiver according to claim 12, further comprising an operation unit for detecting an operation of a viewer,
wherein the distribution information contains category information for categorizing the general living information,
said living information recording unit records the general living information in a way that relates the general living information to predetermined category items on the basis of the category information, and
said display unit displays the map information and one or more category items and displays, when any one of the category items is operated through said operation unit, a symbol of the general living information related to this operated category item at a concerned point on the map.

15. A television receiver according to claim 14, wherein when said operation unit detects a predetermined operation during the display of the symbol, said display unit displays pieces of link information to the general living information and displays, when said operation unit detects an operation upon any one piece of link information, details of the general living information.

16. A television receiver according to claim 12, wherein the general living information contains information for specifying a time related to the general living information,
said control unit refers to calendar information or time information, and
said control unit controls displaying the general living information on the basis of the calendar information or the time information.

17. A television receiver according to claim 12, wherein said control unit executes filtering of the received general living information on the basis of the positional information.

18. A readable-by-computer recording medium recorded with a program for making a computer control television broadcasts to a television receiver having a storage device, said program comprising:
a step of referring to distribution information containing positional information for specifying a point and general living information related to this point; and
a step of distributing the distribution information together with a predetermined piece of control information,
wherein the general living information is accumulated in said television receiver.

19. A readable-by-computer recording medium recorded with a program for making a computer to which a display device is connected, receive and display general living information, said program comprising:
a step of referring map information;
a step of receiving the general living information containing positional information for specifying a point;
a step of recording the general living information received; and
a step of displaying the general living information in a way that synthesizes the general living information with map information on the basis of the positional information.

20. A readable-by-computer recording medium recorded with a program according to claim 19, wherein the general living information is any one of weather information, season information, event information, incident information, traffic information public information and advertising information in a local area covering the point or a combination thereof.

21. A readable-by-computer recording medium recorded with a program according to claim 19, further comprising:
a step of referring to category information, contained in the distribution information, for categorizing the general living information;
a step of recording the general living information in a way that relates the general living information to predetermined category items on the basis of the category information;
a step of displaying the map information and one or more category items;
a step of detecting an operation upon any one the category items; and
a step of displaying a symbol of the general living information related to the operated category item at a concerned point on the map.

22. A readable-by-computer recording medium recorded with a program according to claim 21, further comprising:
a step of detecting a predetermined operation;
a step of displaying, when detecting the predetermined operation during the display of the symbol, pieces of link information to the general living information; and
a step of displaying, when detecting an operation upon any one piece of link information, details of the general living information.

23. A readable-by-computer recording medium recorded with a program according to claim 19, wherein the general living information contains information for specifying a time related to the general living information, said program further comprising:
a step of referring to calendar information or time information, and
a step of controlling the display of the general living information on the basis of the calendar information or the time information.

24. A readable-by-computer recording medium recorded with a program according to claim 19, further comprising a step of filtering the received general living information on the basis of the positional information.
